# FASCICULE DE BREVET EUROPEEN

(11) **EP 2 167 332 B1**
(45) Date de publication et mention de la délivrance du brevet: **12.01.2011**
(21) Numéro de dépôt: 08749489.4
(22) Date de dépôt: 20.05.2008
(51) Int. Cl.: B60C 19/12

(54) **STRATIFIE MULTICOUCHES ET ANCHE AUX GAZ ET ANTI-CREVAISON ET OBJET PNEUMATIQUE LE COMPORTANT**
MEHRLAGIGES, GASDICHTES NOTLAUFLAMINAT UND REIFENOBJEKT DAMIT
MULTILAYERED GAS-TIGHT AND ANTI-PUNCTURE LAMINATE AND PNEUMATIC OBJECT INCLUDING SAME

(30) Priorité: 08.06.2007 FR 0704126
(43) Date de publication de la demande: 31.03.2010
(73) Titulaire: Société de Technologie MICHELIN, 63000 Clermont-Ferrand (FR); MICHELIN Recherche et Technique S.A., 1763 Granges-Paccot (CH)
(72) Inventeur: CUSTODERO, Emmanuel, F-63400 Chamalieres (FR); LESAGE, Pierre, F-63000 Clermont-Ferrand (FR); MERINO LOPEZ, José, F-63200 Riom (FR)
(74) Mandataire: Ribière, Joel
(86) Numéro de dépôt international: PCT/EP2008/004028
(87) Numéro de publication internationale: WO 2008/154996

(56) Documents cités:
- EP-A- 0 264 506
- EP-A- 1 433 830
- WO-A-03/028986
- US-A- 4 113 799
- US-A- 4 228 839
- US-A- 4 426 468
- US-A- 4 895 610
- US-A- 4 913 209

## Description

La présente invention est relative aux couches étanches aux gaz de gonflage ainsi qu'aux couches anti-crevaison auto-obturantes (*"self-sealing"*), destinées à obturer d'éventuels trous dus à des perforations en service, ainsi qu'à l'utilisation de telles couches dans des objets pneumatiques.

Elle est plus particulièrement relative aux stratifiés multicouches remplissant les deux fonctions ci-dessus, étanchéité et anti-crevaison, destinés en particulier à des bandages pneumatiques ou à des chambres à air.

Dans un bandage pneumatique conventionnel du type "tubeless" (c'est-à-dire sans chambre à air), la face radialement interne comporte une couche étanche à l'air (ou plus généralement à tout gaz de gonflage) qui permet le gonflement et le maintien sous pression du bandage pneumatique. Ses propriétés d'étanchéité lui permettent de garantir un taux de perte de pression relativement faible, permettant de maintenir le bandage gonflé en état de fonctionnement normal pendant une durée suffisante, normalement de plusieurs semaines ou plusieurs mois. Elle a également pour fonction de protéger l'armature de carcasse de la diffusion d'air provenant de l'espace intérieur au bandage.

Cette fonction de couche interne ou "gomme intérieure" ("*inner liner*") étanche est essentiellement remplie aujourd'hui par des compositions à base d'élastomère ou caoutchouc butyl, reconnues depuis fort longtemps pour leurs excellentes propriétés d'étanchéité.

Par ailleurs, depuis quelques années, les manufacturiers de bandages pneumatiques consentent des efforts particulièrement importants afin de développer des solutions originales à un problème datant du début même de l'utilisation des roues chaussées de bandages pneumatiques de type gonflés, à savoir comment permettre au véhicule de poursuivre sa route malgré une perte importante ou totale de pression d'un ou plusieurs bandages pneumatiques. Pendant des décennies, la roue de secours fut considérée comme la solution unique et universelle. Puis, plus récemment, les avantages considérables liés à sa suppression éventuelle sont apparus. Le concept de "mobilité étendue" se développe. Les techniques associées permettent de rouler avec le même bandage pneumatique, en fonction de certaines limites à respecter, après une crevaison ou une chute de pression. Cela permet par exemple de se rendre à un point de dépannage sans devoir s'arrêter, dans des circonstances souvent hasardeuses, pour installer la roue de secours.

Des compositions auto-obturantes susceptibles de permettre d'atteindre un tel objectif, par définition aptes à assurer automatiquement, c'est-à-dire sans aucune intervention externe, l'étanchéité d'un bandage pneumatique en cas de perforation de ce dernier par un corps étranger tel qu'un clou, font parties des solutions techniques qui ont été étudiées. Elles sont particulièrement difficiles à mettre au point, devant satisfaire à de nombreuses conditions de nature physique et chimique : elles doivent notamment être efficaces dans une très large gamme de températures d'utilisation et ce pendant toute la durée de vie des bandages pneumatiques.

Cette fonction anti-crevaison est remplie par des compositions auto-obturantes qui sont elles aussi le plus souvent à base de caoutchouc butyl. A titre d'exemples, le brevet US-A-4 113 799 (ou FR-A-2 318 042) décrit comme couche auto-obturante une composition comportant une combinaison de caoutchoucs butyls de haute et basse masses moléculaires réticulés partiellement, en présence éventuellement d'une faible part d'élastomère thermoplastique styrénique. Le brevet US-A-4 228 839 a proposé un mélange de caoutchouc contenant une première matière polymère qui se dégrade par irradiation, telle que du polyisobutylène, et une seconde matière polymère qui se réticule par irradiation, préférentiellement un caoutchouc butyl. Le brevet US-A-4 426 468 a proposé une composition auto-obturante à base de caoutchouc butyl à très haute masse moléculaire, réticulé.

Un inconvénient connu des caoutchoucs butyls est qu'ils présentent des pertes hystérétiques importantes, qui plus est sur un spectre large de température, inconvénient qui se répercute sur les couches ou compositions elles-mêmes, qu'elles soient du type étanches aux gaz comme du type auto-obturantes, avec une forte augmentation de l'hystérèse et une pénalisation notable de la résistance au roulement des bandages pneumatiques utilisant de telles compositions.

Diminuer l'hystérèse des stratifiés multi-couches étanches aux gaz et auto-obturants, et donc in fine la consommation de carburant des véhicules automobiles, est un objectif général auquel se heurte la technologie actuelle.

Or, les Demanderesses ont découvert lors de leurs recherches que des couches élastomères autres que des couches à base d'élastomère butyl permettent l'obtention de stratifiés répondant à un tel objectif, tout en offrant à ces derniers d'excellentes propriétés d'étanchéité et anti-crevaison.

Ainsi, selon un premier objet, la présente invention concerne un stratifié multicouches étanche aux gaz de gonflage et anti-crevaison, utilisable dans un objet pneumatique, **caractérisé en ce qu'**il comporte au moins :
- une première couche élastomère étanche aux gaz comportant un élastomère thermoplastique copolymère à blocs polystyrène et polyisobutylène (ci-après "premier élastomère"), et optionnellement une huile d'extension à un taux compris dans un domaine de 0 à moins de 100 pce ;
- une seconde couche élastomère auto-obturante comportant un élastomère thermoplastique styrénique (ci-après "second élastomère"), identique ou différent du premier élastomère, et une huile d'extension à un taux supérieur à 200 pce.

Comparativement à des caoutchoucs butyls, de tels élastomères présentent l'avantage majeur, en raison de leur nature thermoplastique, de pouvoir être travaillés tels quels à l'état fondu (liquide), et par conséquent d'offrir une possibilité de mise en oeuvre simplifiée.

L'emploi d'un taux très élevé d'huile d'extension dans la seconde couche élastomère s'est révélé offrir des propriétés auto-obturantes notablement améliorées par rapport aux solutions de l'art antérieur, tandis que l'utilisation, préférentielle, d'une huile d'extension en faible quantité, dans la première couche élastomère, peut favoriser l'intégration du stratifié multicouches dans l'objet pneumatique, grâce à une augmentation du pouvoir tackifiant et un abaissement du module et de la première couche étanche aux gaz, sans pénalisation rédhibitoire de son étanchéité.

L'invention concerne également l'utilisation du stratifié multicouches ci-dessus dans un objet pneumatique tel qu'un bandage pneumatique ou une chambre à air, particulièrement lorsque ledit stratifié est disposé sur la paroi interne dudit objet ou bandage pneumatique.

L'invention concerne également l'utilisation pour la fabrication d'un stratifié multicouches étanche aux gaz de gonflage et anti-crevaison, d'au moins une première couche élastomère étanche aux gaz et une seconde couche élastomère auto-obturante telles que définies ci-dessus.

L'invention concerne également un procédé pour étanchéifier vis-à-vis des gaz et protéger contre la crevaison un objet pneumatique, dans lequel on incorpore audit objet pneumatique lors de sa fabrication, ou on ajoute audit objet pneumatique après sa fabrication, un stratifié multicouches selon l'invention.

Le stratifié multicouches de l'invention est utilisable dans tout type d'objet "pneumatique", c'est-à-dire, par définition, tout objet qui prend sa forme utilisable quand on le gonfle d'air. A titre d'exemples de tels objets pneumatiques, on peut citer les bateaux pneumatiques, les ballons ou balles utilisées pour le jeu ou le sport, les bandages pneumatiques, les chambres à air.

Ainsi, l'invention concerne également tout objet pneumatique comportant un stratifié multicouches selon l'invention, le dit objet pneumatique étant en particulier une chambre à air, notamment une chambre à air pour bandage pneumatique, ou encore un objet en caoutchouc tel qu'un bandage pneumatique.

L'invention concerne plus particulièrement les bandages pneumatiques destinés à équiper des véhicules à moteur de type tourisme, SUV ("*Sport Utility Vehicles*"), deux roues (notamment motos), avions, comme des véhicules industriels choisis parmi camionnettes, "Poids-lourd" - c'est-à-dire métro, bus, engins de transport routier (camions, tracteurs, remorques), véhicules hors-la-route tels qu'engins agricoles ou de génie civil -, autres véhicules de transport ou de manutention.

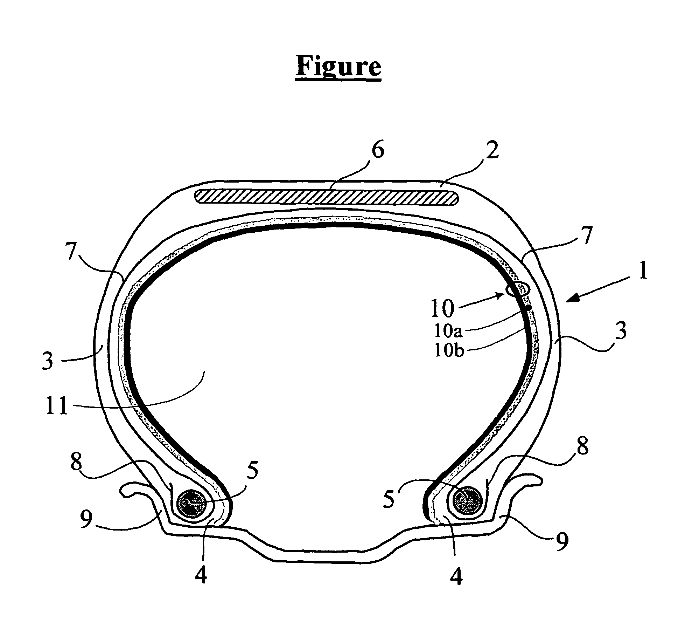

L'invention ainsi que ses avantages seront aisément compris à la lumière de la description et des exemples de réalisation qui suivent, ainsi que de la figure unique relative à ces exemples qui schématise, en coupe radiale, un bandage pneumatique conforme à l'invention.

### I. DESCRIPTION DETAILLEE DE L'INVENTION

Dans la présente description, sauf indication expresse différente, tous les pourcentages (%) indiqués sont des % en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

### I-1. Stratifié multicouches

Le stratifié multicouches de l'invention a donc pour caractéristique essentielle de comporter au moins :
○ une première couche élastomère étanche aux gaz qui comporte un élastomère thermoplastique copolymère à blocs polystyrène et polyisobutylène (dénommé "premier élastomère" dans la présente demande), et optionnellement une huile d'extension à un taux compris dans un domaine de 0 à moins de 100 pce (parties en poids pour cent parties du premier élastomère ou du total des élastomères présent(s) dans la première couche) ;
○ une seconde couche élastomère auto-obturante qui comporte un élastomère thermoplastique styrénique (dénommé "second élastomère" dans la présente demande), identique ou différent du premier élastomère, et une huile d'extension à un taux supérieur à 200 pce (parties en poids pour cent parties du second élastomère ou du total des élastomères présent(s) dans la seconde couche).

Les deux couches comportent donc chacune un élastomère qui est du type thermoplastique styrénique.

Bien entendu, l'invention s'applique aux stratifiés multicouches comportant plus de deux couches, à savoir la première couche étanche aux gaz et la seconde couche auto-obturante telles que décrites en détail ci-après. Elle s'applique par exemple aux cas où est interposée, entre les deux précédentes couches, au moins une troisième couche, ayant par exemple une fonction de couche tampon ou de film étanche aux huiles d'extension présentes dans lesdites première et deuxième couches.

### I-1-A. Elastomères thermoplastiques styréniques

On rappellera ici tout d'abord que les élastomères thermoplastiques styréniques (en abrégé "TPS") font partie, de manière connue, de la famille des élastomères thermoplastiques (en abrégé "TPE"). De structure intermédiaire entre polymères thermoplastiques et élastomères, ils sont constitués de séquences rigides polystyrène reliées par des séquences souples élastomère, par exemple polybutadiène, polyisoprène, poly(éthylène/butylène), ou encore polyisobutylène. Ce sont souvent des élastomères triblocs avec deux segments rigides reliés par un segment souple. Les segments rigides et souples peuvent être disposés linéairement, en étoile ou branchés. Typiquement, chacun de ces segments ou blocs contient au minimum plus de 5, généralement plus de 10 unités de base (par exemple unités styrène et unités isoprène pour un copolymère blocs styrène/ isoprène/ styrène).

Par élastomère thermoplastique copolymère à blocs polystyrène et polyisobutylène (ou "premier élastomère"), doit être entendu tout copolymère thermoplastique comportant au moins un bloc polystyrène (c'est-à-dire un ou plusieurs blocs polystyrène) et au moins un bloc polyisobutylène (c'est-à-dire un ou plusieurs blocs polyisobutylène), auxquels peuvent être associés ou non d'autres blocs (par exemple polyéthylène et/ou polypropylène) et/ou d'autres unités monomères (par exemple des unités insaturées telles que diéniques).

Préférentiellement, le premier élastomère est un copolymère tribloc styrène/ isobutylène/ styrène (en abrégé "SIBS"). Par élastomère ou copolymère SIBS on entend dans la présente demande, par définition, tout élastomère tribloc styrène/ isobutylène/ styrène dans lequel le bloc central polyisobutylène peut être interrompu ou non par une ou plusieurs unités insaturées, en particulier une ou plusieurs unités diéniques telles qu'isopréniques, éventuellement halogénées, ainsi que tout mélange, coupage d'élastomères répondant à cette définition.

Préférentiellement, le premier élastomère, notamment SIBS, est l'élastomère unique, ou l'élastomère majoritaire en poids, présent dans la première couche élastomère.

Si d'éventuels autres élastomères complémentaires sont utilisés dans cette première couche élastomère, le premier élastomère représente plus préférentiellement plus de 50%, encore plus préférentiellement plus de 70% en poids de l'ensemble des élastomères présents dans cette couche ou composition. De tels élastomères complémentaires, préférentiellement minoritaires en poids, pourraient être par exemple des élastomères diéniques tels que du caoutchouc naturel ou un polyisoprène synthétique, un caoutchouc butyl ou encore des élastomères TPS d'une nature différente, dans la limite de la compatibilité de leurs microstructures.

Toutefois, selon un mode de réalisation préférentiel, le premier élastomère, notamment SIBS, est le seul élastomère, et le seul élastomère thermoplastique présent dans la première couche élastomère (étanche aux gaz).

Les élastomères SIBS par exemple sont disponibles commercialement, vendus par exemple par la société KANEKA sous la dénomination "SIBSTAR" (e.g. "Sibstar 102T", "Sibstar 103T" ou "Sibstar 073T"). Ils ont par exemple été décrits, ainsi que leur synthèse, dans les documents brevet EP-A-731 112, US-A-4 946 899, US-A-5 260 383. Ils ont été développés tout d'abord pour des applications biomédicales puis décrits dans diverses applications propres aux élastomères TPE, aussi variées que matériel médical, pièces pour automobile ou pour électroménager, gaines pour fils électriques, pièces d'étanchéité ou élastiques (voir par exemple EP-A-1 431 343, EP-A-1 561 783, EP-A-1 566 405, WO-A-2005/103146).

Le second élastomère est un élastomère TPS quelconque. Il peut être choisi notamment dans le groupe constitué par les copolymères blocs styrène/ butadiène/ styrène, les copolymères blocs styrène/ isoprène/ styrène, les copolymères blocs styrène/ isobutylène/ styrène, les copolymères blocs styrène/ isoprène/ butadiène/ styrène, les copolymères blocs styrène/ éthylène/ butylène/ styrène, les copolymères blocs styrène/ éthylène/ propylène/ styrène, les copolymères blocs styrène/ éthylène/ éthylène/ propylène/ styrène et les mélanges de ces copolymères.

Plus préférentiellement, le second élastomère est choisi dans le groupe constitué par les copolymères blocs styrène/ éthylène/ butylène/ styrène (SEBS), les copolymères blocs styrène/ éthylène/ propylène/ styrène (SEPS) et les mélanges de ces copolymères.

Préférentiellement, le second élastomère, notamment SEBS ou SEPS, est l'élastomère unique, ou l'élastomère majoritaire en poids, présent dans la seconde couche élastomère.

Si d'éventuels autres élastomères complémentaires sont utilisés dans cette seconde couche, le second élastomère représente plus préférentiellement plus de 50%, encore plus préférentiellement plus de 70% en poids de l'ensemble des élastomères présents dans cette couche. Comme précédemment pour la première couche, de tels élastomères complémentaires, préférentiellement minoritaires en poids, pourraient être par exemple des élastomères diéniques tels que du caoutchouc naturel ou un polyisoprène synthétique, un caoutchouc butyl ou encore des élastomères TPS d'une nature différente, dans la limite de la compatibilité de leurs microstructures.

Toutefois, selon un mode de réalisation particulièrement préférentiel, le second élastomère est le seul élastomère, et le seul élastomère thermoplastique présent dans la seconde couche élastomère (composition auto-obturante).

Des élastomères TPS tels que par exemple SEPS ou SEBS étendus avec de forts taux d'huiles sont bien connus et disponibles commercialement sous la forme étendue. A titre d'exemples, on peut citer les produits commercialisés par la société Vita Thermoplastic Elastomers ou VTC ("VTC TPE group") sous la dénomination "Dryflex" (e.g. "Dryflex 967100") ou "Mediprene" (e.g. "Mediprene 500 000M"), ceux vendus par Multibase sous dénomination "Multiflex" (e.g. "Multiflex G00").

Ces produits, développés notamment pour des applications médicales, pharmaceutiques ou cosmétiques, peuvent être mis en oeuvre de façon classique pour des TPE, par extrusion ou moulage, par exemple à partir d'une matière première disponible sous la forme de billes ou de granulés. De manière tout à fait surprenante, ils se sont révélés capables, après un éventuel ajustement de leur taux d'huile d'extension dans le domaine préconisé par la présente invention (supérieur à 200 pce, de préférence entre 200 et 700 pce), de remplir la fonction d'une composition auto-obturante performante.

Selon un mode de réalisation préférentiel de l'invention, le taux pondéral de styrène, dans chacun des premier élastomère et second élastomère, est compris entre 5% et 50%. En dessous du minimum indiqué, le caractère thermoplastique de l'élastomère risque de diminuer de manière sensible tandis qu'au-dessus du maximum préconisé, l'élasticité des couches peut être affectée. Pour ces raisons, le taux de styrène est plus préférentiellement compris entre 10 et 40%, en particulier entre 15 et 35%.

Par styrène, doit être entendu dans la présente description tout monomère à base de styrène, non substitué comme substitué ; parmi les styrènes substitués peuvent être cités par exemple les méthylstyrènes (par exemple α-méthylstyrène, β-méthylstyrène, *p*-méthylstyrène, *tert-*butylstyrène) les chlorostyrènes (par exemple monochlorostyrène, dichlorostyrène).

On préfère que la température de transition vitreuse (Tg, mesurée selon ASTM D3418) des deux élastomères soit inférieure à - 20°C, plus préférentiellement inférieure à - 40°C. Une valeur de Tg supérieure à ces minima peut diminuer les performances lors d'une utilisation à très basse température ; pour une telle utilisation, la Tg des deux élastomères est plus préférentiellement encore inférieure à - 50°C.

La masse moléculaire moyenne en nombre (Mn) des élastomères thermoplastiques styréniques est déterminée de manière connue, par chromatographie d'exclusion stérique (SEC). L'échantillon est préalablement solubilisé dans du tétrahydrofuranne à une concentration d'environ 1 g/l ; puis la solution est filtrée sur filtre de porosité 0,45 µm avant injection. L'appareillage utilisé est une chaîne chromatographique "WATERS alliance". Le solvant d'élution est le tétrahydrofuranne, le débit de 0,7 ml/min, la température du système de 35°C et la durée d'analyse de 90 min. On utilise un jeu de quatre colonnes WATERS en série, de dénominations commerciales "STYRAGEL" ("HMW7", "HMW6E" et deux "HT6E"). Le volume injecté de la solution de l'échantillon de polymère est de 100 µl. Le détecteur est un réfractomètre différentiel "WATERS 2410" et son logiciel associé d'exploitation des données chromatographiques est le système "WATERS MILLENIUM". Les masses molaires moyennes calculées sont relatives à une courbe d'étalonnage réalisée avec des étalons de polystyrène.

La masse moléculaire moyenne en nombre (notée Mn) du premier élastomère est préférentiellement comprise entre 30 000 et 500 000 g/mol, plus préférentiellement comprise entre 40 000 et 400 000 g/mol. En dessous des minima indiqués, la cohésion entre les chaînes d'élastomère, notamment en raison de sa dilution éventuelle (en présence d'une huile d'extension), risque d'être affectée ; d'autre part, une augmentation de la température d'usage risque d'affecter les propriétés mécaniques, notamment les propriétés à la rupture, avec pour conséquence une performance diminuée "à chaud". Par ailleurs, une masse Mn trop élevée peut être pénalisante pour la souplesse de la couche étanche aux gaz. Ainsi, on a constaté qu'une valeur comprise dans un domaine de 50 000 à 300 000 g/mol était particulièrement bien adaptée, notamment à une utilisation dans un bandage pneumatique.

Pour les mêmes raisons que celles exposées ci-dessus, la masse moléculaire Mn du second élastomère est de préférence comprise entre 50 000 et 500 000 g/mol, plus préférentiellement comprise entre 75 000 et 450 000 g/mol ; une masse Mn comprise dans un domaine de 250 000 à 400 000 s'est révélée bien adaptée pour une utilisation dans un bandage pneumatique.

L'indice de polydispersité Ip (rappel : Ip = Mw/Mn avec Mw masse moléculaire moyenne en poids) des premier élastomère et second élastomère est de préférence inférieur à 3 ; plus préférentiellement Ip est inférieur à 2.

### I-1-B. Huiles d'extension

Le premier élastomère tel que SIBS est suffisant à lui seul pour que soit remplie la fonction d'étanchéité aux gaz vis-à-vis des objets pneumatiques dans lesquels il est utilisé.

Toutefois, selon un mode de réalisation préférentiel de l'invention, ce dernier est utilisé dans une composition qui comporte également, à titre d'agent plastifiant, une huile d'extension (ou huile plastifiante) dont la fonction est de faciliter la mise en oeuvre, particulièrement l'intégration dans l'objet pneumatique par un abaissement du module et une augmentation du pouvoir tackifiant de la couche étanche aux gaz, au prix d'une perte d'étanchéité acceptable.

On préfère que le taux d'huile d'extension, dans la première couche élastomère, soit supérieur à 5 pce, c'est-à-dire en d'autres termes compris entre 5 et 100 pce. En dessous du minimum indiqué, la première couche risque de présenter une rigidité trop forte pour certaines applications tandis qu'au-delà du maximum préconisé, on s'expose à un risque de cohésion insuffisante de la composition et de perte d'étanchéité. Pour ces raisons, en particulier pour une utilisation dans un bandage pneumatique, le taux d'huile d'extension est plus préférentiellement supérieur à 10 pce (notamment compris entre 10 et 90 pce), encore plus préférentiellement supérieur à 20 pce (notamment compris entre 20 et 80 pce).

Contrairement à la première couche élastomère, la seconde couche élastomère nécessite quant à elle la présence d'un taux très élevé d'huile d'extension, supérieur à 200 pce. Grâce à ce taux très élevé d'huile d'extension, la seconde couche élastomère auto-obturante, comparativement aux compositions auto-obturantes usuelles, s'est avérée améliorer très notablement la vitesse d'obturation d'un trou dans l'objet pneumatique, lors du retrait différé d'un objet perforant.

On préfère que le taux d'huile d'extension soit compris entre 200 et 700 pce. Pour une utilisation en bandage pneumatique, le taux d'huile d'extension est plus préférentiellement compris entre 250 et 600 pce, notamment entre 300 et 500 pce ; en dessous des minima indiqués la seconde couche élastomère risque de présenter une rigidité trop forte pour certaines applications tandis qu'au-delà du maximum préconisé, on s'expose à un risque de cohésion insuffisante.

Pour les première couche et seconde couche élastomère ci-dessus, on peut utiliser toute huile d'extension, de préférence à caractère faiblement polaire, apte à étendre, plastifier des élastomères, notamment thermoplastiques. A température ambiante (23°C), ces huiles, plus ou moins visqueuses, sont des liquides (c'est-à-dire, pour rappel, des substances ayant la capacité de prendre à terme la forme de leur contenant), par opposition notamment à des résines ou des caoutchoucs qui sont par nature solides.

De préférence, l'huile d'extension du premier élastomère et l'huile d'extension du second élastomère, identiques ou différentes, sont choisies dans le groupe constitué par les huiles polyoléfiniques (c'est-à-dire issues de la polymérisation d'oléfines, monooléfines ou dioléfines), les huiles paraffiniques, les huiles naphténiques (à basse ou haute viscosité), les huiles aromatiques, les huiles minérales, et les mélanges de ces huiles.

Plus préférentiellement, l'huile d'extension du premier élastomère et l'huile d'extension du second élastomère, identiques ou différentes, sont choisies dans le groupe constitué par les polybutènes, les huiles paraffiniques et les mélanges de ces huiles.

Il doit être noté en particulier que l'ajout d'une huile d'extension au premier élastomère entraîne une certaine perte d'étanchéité de la première couche élastomère, variable selon le type et la quantité d'huile utilisée. On utilise préférentiellement pour la première couche une huile du type polybutène, en particulier une huile polyisobutylène (en abrégé "PIB"). De telles huiles polybutène ont démontré le meilleur compromis de propriétés d'étanchéité comparativement aux autres huiles testées, notamment à des huiles paraffiniques.

A titre d'exemples, des huiles polyisobutylène sont commercialisées notamment par la société UNIVAR sous la dénomination "Dynapak Poly" (e.g. "Dynapak Poly 190"), par BASF sous les dénominations "Glissopal" (e.g. "Glissopal 1000") ou "Oppanol" (e.g. "Oppanol B12") ; des huiles paraffiniques sont commercialisées par exemple par EXXON sous la dénomination "Telura 618" ou par Repsol sous la dénomination "Extensol 51".

La masse moléculaire moyenne en nombre (Mn) de l'huile d'extension est préférentiellement comprise entre 200 et 30 000 g/mol, plus préférentiellement encore comprise entre 300 et 10 000 g/mol. Pour des masses Mn trop basses, il existe un risque de migration de l'huile à l'extérieur de la composition, tandis que des masses trop élevées peuvent entraîner une rigidification excessive de cette composition. Une masse Mn comprise entre 350 et 4 000 g/mol, en particulier entre 400 et 3 000 g/mol, s'est avérée constituer un excellent compromis pour les applications visées, en particulier pour une utilisation dans un bandage pneumatique.

La masse moléculaire moyenne en nombre (Mn) de l'huile d'extension est déterminée par SEC, l'échantillon étant préalablement solubilisé dans du tétrahydrofuranne à une concentration d'environ 1 g/l ; puis la solution est filtrée sur filtre de porosité 0,45µm avant injection. L'appareillage est la chaîne chromatographique "WATERS alliance". Le solvant d'élution est le tétrahydrofuranne, le débit de 1 ml/min, la température du système de 35°C et la durée d'analyse de 30 min. On utilise un jeu de deux colonnes "WATERS" de dénomination "STYRAGEL HT6E". Le volume injecté de la solution de l'échantillon de polymère est de 100 µl. Le détecteur est un réfractomètre différentiel "WATERS 2410" et son logiciel associé d'exploitation des données chromatographiques est le système "WATERS MILLENIUM". Les masses molaires moyennes calculées sont relatives à une courbe d'étalonnage réalisée avec des étalons de polystyrène.

L'homme du métier saura, à la lumière de la description et des exemples de réalisation qui suivent, ajuster la quantité d'huile d'extension en fonction des conditions particulières d'usage du stratifié multicouches de l'invention, notamment de l'objet pneumatique dans lequel il est destiné à être utilisé.

### I-1-C. Additifs divers

La première couche élastomère et la seconde couche élastomère décrites précédemment peuvent comporter par ailleurs les divers additifs usuellement présents dans les couches étanches à l'air ou les couches auto-obturantes connues de l'homme du métier. On citera par exemple des charges renforçantes telles que du noir de carbone ou de la silice, des charges non renforçantes ou inertes, des agents colorants avantageusement utilisables pour la coloration des compositions, des charges lamellaires améliorant encore l'étanchéité (e.g. phyllosilicates tels que kaolin, talc, mica, graphite, argiles ou argiles modifiées (*"organo clays"*)), des plastifiants autres que les huiles d'extension précitées, des agents de protection tels que antioxydants ou antiozonants, anti-UV, divers agents de mise en oeuvre ou autres stabilisants, ou encore des promoteurs aptes à favoriser l'adhésion au reste de la structure de l'objet pneumatique.

Outre les élastomères précédemment décrits (premier élastomère, second élastomère et élastomères complémentaires éventuels), la première couche élastomère et la seconde couche élastomère pourraient aussi comporter, selon une fraction pondérale de préférence minoritaire par rapport à l'élastomère principal (premier ou second élastomère, respectivement), des polymères autres que des élastomères, tels que par exemple des polymères thermoplastiques compatibles avec lesdits premier et second élastomères.

Les première et seconde couches précédemment décrites sont des composés solides (à 23°C) et élastiques, qui se caractérisent notamment, grâce à leur formulation spécifique, par une très haute souplesse et très haute déformabilité.

Selon un mode de réalisation préférentiel de l'invention, notamment lors d'une utilisation dans un bandage pneumatique, la première couche ou composition étanche aux gaz présente un module sécant en extension, à 10% d'allongement (noté M10), qui est inférieur à 2 MPa, plus préférentiellement inférieur à 1,5 MPa (notamment inférieur à 1 MPa). Selon un autre mode de réalisation préférentiel, notamment lors d'une utilisation dans un bandage pneumatique, la seconde couche élastomère (composition auto-obturante) présente un allongement à la rupture supérieur à 500%, notamment supérieur à 800%, et une contrainte à la rupture supérieure à 0,2 MPa. Les propriétés mécaniques ci-dessus sont mesurées en première élongation (c'est-à-dire sans cycle d'accommodation) à une température de 23°C, avec une vitesse de traction de 500 mm/min (norme ASTM D412), et rapportées à la section initiale de l'éprouvette.

### I-2. Utilisation du stratifié de l'invention dans un bandage pneumatique

Le stratifié précédemment décrit est utilisable dans tout type d'objet pneumatique ; il est particulièrement bien adapté à un objet pneumatique (produit fini ou semi-fini) en caoutchouc, tout particulièrement à un bandage pneumatique pour véhicule automobile tel qu'un véhicule de type deux roues, tourisme ou industriel.

Un tel stratifié est préférentiellement disposé sur la paroi interne de l'objet pneumatique, mais il peut être également intégré complètement à sa structure interne.

La première couche élastomère étanche à l'air (ou tout autre gaz de gonflage, par exemple azote) a une épaisseur préférentiellement supérieure à 0,05 mm, plus préférentiellement comprise entre 0,1 mm et 10 mm (par exemple entre 0,1 et 1,0 mm). La seconde couche élastomère auto-obturante a une épaisseur préférentiellement supérieure à 0,3 mm, plus préférentiellement comprise entre 0,5 mm et 10 mm (par exemple entre 1 et 5 mm).

On comprendra aisément que, selon les domaines d'application spécifiques, les dimensions et les pressions en jeu, le mode de mise en oeuvre de l'invention peut varier, la première couche étanche à l'air comme la seconde couche auto-obturante comportant en fait plusieurs gammes préférentielles d'épaisseur. Ainsi, par exemple, pour des bandages pneumatiques de type tourisme, elles peuvent avoir une épaisseur d'au moins 0,4 mm, préférentiellement comprise entre 0,6 et 2 mm. Selon un autre exemple, pour des bandages pneumatiques de véhicules poids lourds ou agricole, l'épaisseur préférentielle peut se situer entre 1 et 3 mm. Selon un autre exemple, pour des bandages pneumatiques de véhicules dans le domaine du génie civil ou pour avions, l'épaisseur préférentielle peut se situer entre 2 et 10 mm.

Comparativement aux stratifiés étanches à l'air et auto-obturants à base de caoutchouc butyl, le stratifié selon l'invention a l'avantage de présenter, dans une très large gamme de température d'utilisation des bandages pneumatiques, une hystérèse nettement réduite, et donc d'offrir une résistance au roulement réduite aux bandages pneumatiques, comme cela est démontré dans les exemples de réalisation qui suivent.

### II. EXEMPLE DE REALISATION DE L'INVENTION

Le stratifié multicouches de l'invention est avantageusement utilisable dans les bandages pneumatiques de tous types de pneumatiques, en particulier de bandages pour véhicules tourisme ou véhicules industriels tels que Poids-lourd.

A titre d'exemple, la figure unique annexée représente de manière très schématique (sans respect d'une échelle spécifique), une coupe radiale d'un bandage pneumatique incorporant un stratifié conforme à l'invention.

Ce bandage pneumatique 1 comporte un sommet 2 renforcé par une armature de sommet ou ceinture 6, deux flancs 3 et deux bourrelets 4, chacun de ces bourrelets 4 étant renforcé avec une tringle 5. Le sommet 2 est surmonté d'une bande de roulement non représentée sur cette figure schématique. Une armature de carcasse 7 est enroulée autour des deux tringles 5. dans chaque bourrelet 4, le retournement 8 de cette armature 7 étant par exemple disposé vers l'extérieur du pneumatique 1 qui est ici représenté monté sur sa jante 9. L'armature de carcasse 7 est de manière connue en soi constituée d'au moins une nappe renforcée par des câbles dits "radiaux", par exemple textiles ou métalliques, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6).

Le bandage pneumatique 1 est **caractérisé en ce que** sa paroi interne comporte un stratifié multi-couches (10) conforme à l'invention, comportant au moins deux couches (10a, 10b), étanche à l'air grâce à sa première couche élastomère (10a) et auto-obturant grâce à sa seconde couche élastomère (10b). Conformément à un mode de réalisation préférentiel de l'invention, le stratifié couvre substantiellement toute la paroi interne du bandage pneumatique, se prolongeant d'un flanc à l'autre, au moins jusqu'au niveau du crochet de jante lorsque le bandage pneumatique est en position montée.

Selon un mode de réalisation préférentiel, le stratifié est disposé de telle manière que la seconde couche (10b) auto-obturante soit radialement la plus interne dans le bandage pneumatique, par rapport à la première couche (10a) disposée alors entre la seconde couche et le reste de la structure du bandage pneumatique 1 comme schématisé sur la figure annexée. Un autre mode de réalisation possible est celui où la première couche (10a) étanche aux gaz est radialement la plus interne.

Contrairement à un bandage pneumatique conventionnel utilisant une seule couche étanche à base de caoutchouc butyl, le bandage pneumatique conforme à l'invention utilise dans cet exemple, tout d'abord comme première couche élastomère (10a) étanche à l'air (épaisseur 0,8 mm) un élastomère SIBS ("Sibstar 102T" avec un taux de styrène d'environ 15%, une Tg d'environ - 65°C et une Mn d'environ 90 000 g/mol) étendu avec environ 55 pce d'huile PIB ("Dynapak Poly 190" - Mn de l'ordre de 1000 g/mol).

Cette première couche (10a) est aussi destinée, dans le bandage pneumatique de l'invention, à protéger l'armature de carcasse de la diffusion d'air provenant de l'espace intérieur au bandage. Cette première couche 10a étanche à l'air permet donc le gonflement et le maintien sous pression du bandage 1 ; ses propriétés d'étanchéité lui permettent de garantir un taux de perte de pression relativement faible, permettant de maintenir le bandage gonflé, en état de fonctionnement normal, pendant une durée suffisante, normalement de plusieurs semaines ou plusieurs mois.

La seconde couche élastomère (10b) (épaisseur d'environ 2 mm) est constituée quant à elle du produit "Mediprene 500000M" précédemment décrit, dont les deux constituants essentiels sont un élastomère SEBS (avec un taux de styrène d'environ 30%, une Tg proche de - 60°C et une valeur Mn de l'ordre de 300 000 g/mol) et une huile d'extension paraffinique (Mn de l'ordre de 600 g/mol) présente à un taux pondéral d'environ 400 pce.

Cette couche 10b, disposée donc entre la couche 10a et la cavité 11 du pneumatique, permet de procurer au pneumatique une protection efficace contre les pertes de pression dues aux perforations accidentelles, en permettant l'obturation automatique de ces perforations.

Si un corps étranger tel qu'un clou traverse la structure de l'objet pneumatique, par exemple une paroi telle qu'un flanc 3 ou le sommet 6 du bandage pneumatique 1, la composition servant de couche auto-obturante subit plusieurs contraintes. En réaction à ces contraintes, et grâce à ses propriétés avantageuses de déformabilité et d'élasticité, ladite composition crée une zone de contact étanche tout autour du corps. Peu importe que le contour ou profil de ce dernier soit uniforme ou régulier, la souplesse de la composition auto-obturante permet à cette dernière de s'immiscer dans des ouvertures de taille minime. Cette interaction entre la composition auto-obturante et le corps étranger confère une étanchéité à la zone affectée par ce dernier.

En cas de retrait, accidentel ou volontaire, du corps étranger, une perforation reste : celle-ci est susceptible de créer une fuite plus ou moins importante, en fonction de sa taille. La composition auto-obturante, soumise à l'effet de la pression hydrostatique, est suffisamment souple et déformable pour obturer, en se déformant, la perforation, empêchant la fuite de gaz de gonflage. Dans le cas notamment d'un bandage pneumatique, il s'est avéré que la souplesse du stratifié multicouches de l'invention permettait de supporter sans problème les efforts des parois environnantes, même lors des phases de déformations du bandage pneumatique chargé et en roulage.

Le pneumatique pourvu de son stratifié (10) tel que décrit ci-dessus et définissant la face radialement interne dudit bandage, peut être réalisé avant ou après vulcanisation (ou cuisson).

Dans le premier cas (i.e., avant cuisson du bandage pneumatique), le stratifié est simplement appliqué de façon conventionnelle à l'endroit souhaité, pour formation des couches 10a et 10b superposées. La vulcanisation est ensuite effectuée classiquement. Les élastomères TPS supportent bien les contraintes liées à l'étape de vulcanisation. Une variante de fabrication avantageuse, pour l'homme du métier des bandages pneumatiques, consistera par exemple au cours d'une première étape, à déposer à plat le stratifié de l'invention directement sur un tambour de confection, sous la forme d'un bicouche d'épaisseur adaptée (par exemple d'environ 3 mm), avant de recouvrir ce dernier avec le reste de la structure du bandage pneumatique, selon des techniques de fabrication bien connues de l'homme du métier.

Dans le second cas (i.e., après cuisson du bandage pneumatique), le stratifié est appliqué à l"intérieur du bandage pneumatique cuit par tout moyen approprié, par exemple par collage, par pulvérisation ou encore extrusion et soufflage de deux films d'épaisseur appropriée.

Dans les exemples qui suivent, les propriétés d'étanchéité ont tout d'abord été analysées sur des éprouvettes de couches étanches aux gaz à base d'une part de caoutchouc butyl, d'autre part du premier élastomère (élastomère thermoplastique copolymère à blocs polystyrène et polyisobutylène - dans le cas présent, SIBS "Sibstar 102T" avec et sans huile d'extension).

Pour cette analyse, on a utilisé un perméamètre à parois rigides, placé dans une étuve (température de 60°C dans le cas présent), muni d'un capteur de pression (étalonné dans le domaine de 0 à 6 bars) et relié à un tube équipé d'une valve de gonflage. Le perméamètre peut recevoir des éprouvettes standard sous forme de disque (par exemple de diamètre 65 mm dans le cas présent) et d'épaisseur uniforme pouvant aller jusqu'à 3 mm (0,5 mm dans le cas présent). Le capteur de pression est connecté à une carte d'acquisition de données *National Instruments* (acquisition quatre voies analogiques 0-10 V) qui est reliée à un ordinateur réalisant une acquisition en continu avec une fréquence de 0,5 Hz (1 point toutes les deux secondes). Le coefficient de perméabilité (K) est mesuré à partir de la droite de régression linéaire (moyenne sur 1000 points) donnant en fonction du temps la pente a de la perte de pression à travers l'éprouvette testée, après stabilisation du système c'est-à-dire obtention d'un régime stable au cours duquel la pression décroît linéairement en fonction du temps.

Tout d'abord, le premier élastomère (SIBS) utilisé seul, c'est-à-dire sans huile d'extension ni autre additif, s'est révélé présenter, à épaisseur égale, un coefficient de perméabilité très bas, égal à celui de la composition usuelle à base de caoutchouc butyl ; son module M 10 est quant à lui inférieur de près de 40% à celui de la composition témoin à base de caoutchouc butyl (1,4 MPa comparé à 2,3 MPa). Ceci constitue déjà un résultat remarquable pour un tel matériau.

Comme déjà indiqué, si l'on accepte en contrepartie une certaine perte d'étanchéité, l'ajout d'une huile d'extension au premier élastomère permet avantageusement de faciliter l'intégration du stratifié dans l'objet pneumatique, par un abaissement du module et une augmentation du pouvoir tackifiant de la première couche élastomère étanche aux gaz. Ainsi, en utilisant par exemple 45 et 65 pce d'huile d'extension, on a constaté que le coefficient de perméabilité était augmenté (et donc l'étanchéité réduite) de plus de deux (2,2 et 3,4 fois, respectivement) en présence d'une huile paraffinique, d'un facteur inférieur à deux (1,5 et 1,6 fois, respectivement) en présence d'huile PIB ("Dynapak Poly 190").

C'est en cela que la combinaison de SIBS et d'huile PIB s'est révélée offrir le meilleur compromis de propriétés en ce qui concerne le première couche étanche aux gaz. Sur la composition étanche à base de SIBS et PIB, on a constaté par ailleurs que le module M10 était encore diminué, réduit à une valeur inférieure à 1 MPa.

A la suite des tests de laboratoire ci-dessus, des bandages pneumatiques conformes à l'invention, du type pour véhicule tourisme (dimension 205/55 R16), ont été fabriqués ; leur paroi interne a été recouverte (sur tambour de confection, avant fabrication du reste du pneumatique) par un stratifié (10) étanche à l'air et anti-crevaison d'une épaisseur totale d'environ 2,8 mm, puis les pneumatiques ont été vulcanisés. La première couche étanche à l'air (10a) était formée du SIBS étendu avec 55 pce d'huile PIB, telle que décrite supra.

Ces bandages pneumatiques conformes à l'invention ont été comparés à des bandages témoins (marque Michelin "Energy 3") dont le paroi intérieure comportait une seule couche étanche à l'air conventionnelle, à base de caoutchouc butyl, de même épaisseur que la première couche étanche aux gaz précédente (0,8 mm).

Tout d'abord, la résistance au roulement des bandages pneumatiques a été mesurée sur un volant, selon la méthode ISO 87-67 (1992).

On a constaté alors que les bandages pneumatiques de l'invention présentaient une résistance au roulement réduite de manière très significative et inattendue pour l'homme du métier, de près de 4% par rapport aux bandages pneumatiques témoins, malgré la présence d'une couche supplémentaire auto-obturante dans le bandage pneumatique de l'invention.

Ensuite, sur les bandages pneumatiques montés et gonflés, cinq perforations de 6 mm de diamètre et deux perforations de 1 mm de diamètre ont été réalisées, à travers la bande de roulement et le bloc sommet d'une part, les flancs d'autre part, à l'aide de poinçons qui ont été immédiatement retirés.

Le bandage pneumatique témoin, ne comportant que la couche étanche aux gaz à base de caoutchouc butyl, a perdu sa pression en moins d'une minute, devenant totalement inapte au roulage.

De manière inattendue, le bandage pneumatique de l'invention a quant à lui résisté à un roulage sur volant à 130 km/h, sous une charge nominale de 400 kg, sans perte de pression pendant plus de 6300 km, distance au-delà de laquelle le roulage a été stoppé. Sur un autre bandage pneumatique conforme à l'invention, on a procédé de la même façon en laissant cette fois en place les objets perforants, pendant une semaine. Le même excellent résultat a été obtenu.

En conclusion, l'invention offre aux concepteurs de bandages pneumatiques l'opportunité de réduire de manière sensible l'hystérèse des stratifiés multi-couches étanches aux gaz et auto-obturants, et donc la consommation de carburant des véhicules automobiles équipés de tels bandages, tout en offrant à ces derniers d'excellentes propriétés d'étanchéité et anti-crevaison.

## Revendications

1. Stratifié multicouches étanche aux gaz de gonflage et anti-crevaison, utilisable dans un objet pneumatique, **caractérisé en ce qu'**il comporte au moins :
- une première couche élastomère étanche aux gaz comportant un élastomère thermoplastique copolymère à blocs polystyrène et polyisobutylène (ci-après "premier élastomère"), et optionnellement une huile d'extension à un taux compris dans un domaine de 0 à moins de 100 pce ;
- une seconde couche élastomère auto-obturante comportant un élastomère thermoplastique styrénique (ci-après "second élastomère"), identique ou différent du premier élastomère, et une huile d'extension à un taux supérieur à 200 pce.

2. Stratifié selon la revendication 1, dans lequel le premier élastomère est un copolymère styrène/ isobutylène/ styrène (SIBS).

3. Stratifié selon la revendication 1 ou 2, dans lequel le premier élastomère est, dans la première couche élastomère, l'élastomère unique ou l'élastomère majoritaire en poids.

4. Stratifié selon l'une quelconque des revendications 1 à 3, dans lequel le second élastomère est choisi dans le groupe constitué par les copolymères blocs styrène/ butadiène/ styrène, les copolymères blocs styrène/ isoprène/ styrène, les copolymères blocs styrène/ isobutylène/ styrène, les copolymères blocs styrène/ isoprène/ butadiène/ styrène, les copolymères blocs styrène/ éthylène/ butylène/ styrène, les copolymères blocs styrène/ éthylène/ propylène/ styrène, les copolymères blocs styrène/ éthylène/ éthylène/ propylène/ styrène et les mélanges de ces copolymères.

5. Stratifié selon la revendication 4, dans lequel le second élastomère est choisi dans le groupe constitué par les copolymères blocs styrène/ éthylène/ butylène/ styrène, les copolymères blocs styrène/ éthylène/ propylène/ styrène, et les mélanges de ces copolymères.

6. Stratifié selon l'une quelconque des revendications 1 à 5, dans lequel le second élastomère est, dans la seconde couche élastomère, l'élastomère unique ou l'élastomère majoritaire en poids.

7. Stratifié selon l'une quelconque des revendications 1 à 6, dans lequel le premier élastomère et le second élastomère comprennent chacun entre 5 et 50% en masse de styrène.

8. Stratifié selon l'une quelconque des revendications 1 à 7, dans lequel le premier élastomère et le second élastomère ont chacun une température de transition vitreuse (Tg) qui est inférieure à - 20°C.

9. Stratifié selon l'une quelconque des revendications 1 à 8, dans lequel la masse moléculaire moyenne en nombre du premier élastomère est comprise entre 30 000 et 500 000 g/mol, et la masse moléculaire moyenne en nombre du second élastomère est comprise entre 50 000 et 500 000 g/mol.

10. Stratifié selon l'une quelconque des revendications 1 à 9, dans lequel l'huile d'extension du premier élastomère et l'huile d'extension du second élastomère, identiques ou différentes, sont choisies dans le groupe constitué par les huiles polyoléfiniques, les huiles paraffiniques, les huiles naphténiques, les huiles aromatiques, les huiles minérales, et les mélanges de ces huiles.

11. Stratifié selon la revendication 10, dans lequel l'huile d'extension du premier élastomère et l'huile d'extension du second élastomère, identiques ou différentes, sont des huiles polyisobutylène, de préférence des huiles polybutène.

12. Stratifié selon l'une quelconque des revendications 1 à 11, dans lequel la masse moléculaire moyenne en nombre de l'huile d'extension du premier élastomère et la masse moléculaire moyenne en nombre de l'huile d'extension du second élastomère sont chacune comprises entre 200 et 30 000 g/mol.

13. Stratifié selon l'une quelconque des revendications 1 à 12, dans lequel le taux d'huile d'extension du premier élastomère est compris entre 5 et 100 pce, et le taux d'huile d'extension du second élastomère est compris entre 200 et 700 pce.

14. Objet pneumatique comportant un stratifié selon l'une quelconque des revendications 1 à 13.

15. Objet pneumatique selon la revendication 14, ledit objet pneumatique étant un bandage pneumatique ou une chambre à air.

## Claims

1. Multilayer laminate that is impermeable to inflation gases and puncture-resistant, usable in an inflatable article, **characterized in that** it comprises at least:
- a gastight first elastomer layer comprising a thermoplastic elastomer copolymer with polystyrene and polyisobutylene blocks (hereinafter "first elastomer"), and optionally an extender oil with a content within a range of 0 to less than 100 phr; and
- a self-sealing second elastomer layer comprising a thermoplastic styrene elastomer (hereinbelow "second elastomer"), identical to or different from the first elastomer, and an extender oil with a content greater than 200 phr.

2. Laminate according to Claim 1, in which the first elastomer is a styrene/isobutylene/styrene (SIBS) copolymer.

3. Laminate according to Claim 1 or 2, in which the first elastomer is, in the first elastomer layer, the sole elastomer or the predominant elastomer by weight.

4. Laminate according to any one of Claims 1 to 3, in which the second elastomer is chosen from the group consisting of styrene/butadiene/styrene block copolymers, styrene/isoprene/styrene block copolymers, styrene/isobutylene/styrene block copolymers, styrene/isoprene/butadiene/styrene block copolymers, styrene/ethylene-butylene/styrene block copolymers, styrene/ethylene-propylene/styrene block copolymers, styrene/ethylene-ethylene-propylene/styrene block copolymers and mixtures of these copolymers.

5. Laminate according to Claim 4, in which the second elastomer is chosen from the group consisting of styrene/ethylene-butylene/styrene block copolymers, styrene/ethylenepropylene/styrene block copolymers, and mixtures of these copolymers.

6. Laminate according to any one of Claims 1 to 5, in which the second elastomer is, in the second elastomer layer, the sole elastomer or the predominant elastomer by weight.

7. Laminate according to any one of Claims 1 to 6, in which the first elastomer and the second elastomer each comprise between 5 and 50% by weight of styrene.

8. Laminate according to any one of Claims 1 to 7, in which the first elastomer and the second elastomer each have a glass transition temperature (T_{g}) which is below -20°C.

9. Laminate according to any one of Claims 1 to 8, in which the number-average molecular weight (Mₙ) of the first elastomer is between 30 000 and 500 000 g/mol and the number-average molecular weight (Mₙ) of the second elastomer is between 50 000 and 500 000 g/mol.

10. Laminate according to any one of Claims 1 to 9, in which the extender oil of the first elastomer and the extender oil of the second elastomer, which are identical or different, are chosen from the group consisting of polyolefin oils, paraffinic oils, naphthenic oils, aromatic oils, mineral oils and mixtures of these oils.

11. Laminate according to Claim 10, in which the extender oil of the first elastomer and the extender oil of the second elastomer, which are identical or different, are polyisobutylene oils, preferably polybutene oils.

12. Laminate according to any one of Claims 1 to 11, in which the number-average molecular weight (Mₙ) of the extender oil of the first elastomer and the number-average molecular weight (Mₙ) of the extender oil of the second elastomer are each between 200 and 30 000 g/mol.

13. Laminate according to any one of Claims 1 to 12, in which the extender oil content of the first elastomer is between 5 and 100 phr and the extender oil content of the second elastomer is between 200 and 700 phr.

14. Inflatable article comprising a laminate according to any one of Claims 1 to 13.

15. Inflatable article according to Claim 14, said inflatable article being a pneumatic tyre or an inner tube.

## Patentansprüche

1. Aufpumpgasdichtes mehrschichtiges Anti-Pannen-Laminat, das in einem pneumatischen Objekt verwendet werden kann, **dadurch gekennzeichnet, daß** es mindestens folgendes umfaßt:
- eine erste gasdichte Elastomerschicht, umfassend ein thermoplastisches Blockcopolymer-Elastomer mit Polystyrol und Polyisobutylen Blöcken (im folgenden "erstes Elastomer") und gegebenenfalls ein Strecköl in einer Menge im Bereich von 0 bis weniger als 100 phe;
- eine zweite selbstversiegelnde Elastomerschicht, umfassend ein thermoplastisches Styrol-Elastomer (im folgenden "zweites Elastomer"), das mit dem ersten Elastomer identisch oder davon verschieden ist, und ein Strecköl in einer Menge von mehr als 200 phe.

2. Laminat nach Anspruch 1, wobei es sich bei dem ersten Elastomer um ein Styrol-Isobutylen-StyrolCopolymer (SIBS) handelt.

3. Laminat nach Anspruch 1 oder 2, wobei das erste Elastomer das einzige Elastomer oder das gewichtsmäßig überwiegende Elastomer in der ersten Elastomerschicht ist.

4. Laminat nach einem der Ansprüche 1 bis 3, wobei das zweite Elastomer aus der Gruppe bestehend aus Styrol-Butadien-Styrol-Blockcopolymeren, Styrol-Isopren-Styrol-Blockcopolymeren, Styrol-Isobutylen-Styrol-Blockcopolymeren, Styrol-Isopren-Butadien-Styrol-Blockcopolymeren, Styrol-Ethylen-Butylen-Styrol-Blockcopolymeren, Styrol-Ethylen-Propylen-Styrol-Blockcopolymeren, Styrol-Ethylen-Ethylen-Propylen-Styrol-Blockcopolymeren und Mischungen dieser Copolymere ausgewählt ist.

5. Laminat nach Anspruch 4, wobei das zweite Elastomer aus der Gruppe bestehend aus Styrol-Ethylen-Butylen-Styrol-Blockcopolymeren, Styrol-Ethylen-Propylen-Styrol-Blockcopolymeren und Mischungen dieser Copolymere ausgewählt ist.

6. Laminat nach einem der Ansprüche 1 bis 5, wobei das zweite Elastomer das einzige Elastomer oder das gewichtsmäßig überwiegende Elastomer in der zweiten Elastomerschicht ist.

7. Laminat nach einem der Ansprüche 1 bis 6, wobei das erste Elastomer und das zweite Elastomer jeweils zwischen 5 und 50 Gew.-% Styrol enthalten.

8. Laminat nach einem der Ansprüche 1 bis 7, wobei das erste Elastomer und das zweite Elastomer jeweils eine Glasübergangstemperatur (Tg) von weniger als -20°C aufweisen.

9. Laminat nach einem der Ansprüche 1 bis 8, wobei das zahlenmittlere Molekulargewicht des ersten Elastomers zwischen 30.000 und 500.000 g/mol liegt und das zahlenmittlere Molekulargewicht des zweiten Elastomers zwischen 50.000 und 500.000 g/mol liegt.

10. Laminat nach einem der Ansprüche 1 bis 9, wobei das Strecköl des ersten Elastomers und das Strecköl des zweiten Elastomers, die gleich oder verschieden sind, aus der Gruppe bestehend aus Polyolefinölen, Paraffinölen, naphthenischen Ölen, aromatischen Ölen, Mineralölen und Mischungen dieser Öle ausgewählt sind.

11. Laminat nach Anspruch 10, wobei es sich bei dem Strecköl des ersten Elastomers und dem Strecköl des zweiten Elastomers, die gleich oder verschieden sind, um Polyisobutylenöle, vorzugsweise Polybutenöle, handelt.

12. Laminat nach einem der Ansprüche 1 bis 11, wobei das zahlenmittlere Molekulargewicht des Strecköls des ersten Elastomers und das zahlenmittlere Molekulargewicht des Strecköls des zweiten Elastomers jeweils zwischen 200 und 30.000 g/mol liegen.

13. Laminat nach einem der Ansprüche 1 bis 12, wobei der Streckölgehalt des ersten Elastomers zwischen 5 und 100 phe liegt und der Streckölgehalt des zweiten Elastomers zwischen 200 und 700 phe liegt.

14. Pneumatisches Objekt, umfassend ein Laminat nach einem der Ansprüche 1 bis 13.

15. Pneumatisches Objekt nach Anspruch 14, bei dem es sich um einen Luftreifen oder einen Luftschlauch handelt.
